(19) Europäisches Patentamt
European Patent Office
Office européen des brevets

(11) EP 3 176 209 B1

(12) **EUROPEAN PATENT SPECIFICATION**

(45) Date of publication and mention of the grant of the patent:
**04.08.2021 Bulletin 2021/31**

(51) Int Cl.:
***C08L 9/00*** *(2006.01)*

(21) Application number: **16198904.1**

(22) Date of filing: **15.11.2016**

# (54) PRODUCTION METHOD FOR RUBBER COMPOSITION FOR TIRES

HERSTELLUNGSVERFAHREN FÜR KAUTSCHUKZUSAMMENSETZUNG FÜR REIFEN

PROCÉDÉ DE PRODUCTION DE COMPOSITION DE CAOUTCHOUC POUR PNEUMATIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.12.2015 JP 2015236721**

(43) Date of publication of application:
**07.06.2017 Bulletin 2017/23**

(73) Proprietor: **Sumitomo Rubber Industries, Ltd.**
**Chuo-ku**
**Kobe-shi,**
**Hyogo 651-0072 (JP)**

(72) Inventor: **FUJIMORI, Daiko**
**Kobe-shi,, Hyogo 651-0072, (JP)**

(74) Representative: **TBK**
**Bavariaring 4-6**
**80336 München (DE)**

(56) References cited:
**EP-A1- 2 947 087**
**WO-A1-2008/145155**
**WO-A1-2015/055252**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 176 209 B1

## Description

BACKGROUND OF THE INVENTION

Field of the Invention

The present invention relates to a production method for a rubber composition for tires.

Description of the Background Art

Conventionally, for the purpose of improving safety and low fuel consumption performance of a tire, silica is used as a reinforcing filler. In addition, since a sufficient effect is not obtained only with silica, a silane coupling agent that binds silica and a rubber component is used together with silica (see, e.g., Japanese Laid-Open Patent Publication No. 2002-363346).

However, silica has high aggregability, and it is difficult to uniformly disperse silica within rubber even when a silane coupling agent is used. Thus, performance of silica cannot be brought out to the maximum degree.

As described above, it is difficult to uniformly disperse silica within rubber. This tendency is significant, in particular, in the case where a styrene butadiene rubber having a high styrene content and a high weight average molecular weight is used.

WO 2008145155 (A1) relates to a tire comprising at least one structural element including a crosslinked elastomeric material obtained by crosslinking a crosslinkable elastomeric composition comprising: (a) 100 phr of at least one solid elastomeric polymer having a Mooney viscosity, measured at 100°C, of from 30 to 90; (b) from 3 phr to 33 phr of at least one liquid elastomeric polymer having a number average molecular weight (Mn) of from 1000 to 20000, and an amount of vinyl unsaturations in the butadiene part, of from 15% to 100%; (c) from 5 phr to 120 phr of at least one silica reinforcing filler; (d) from 0.1 phr to 10 phr of at least one coupling agent containing at least one mercapto group.

EP2947087 (A1) relates to urea-containing silanes which can be used as coupling reagents in filled rubber mixtures, for example tire treads.

WO 2015055252 (A1) relates to vinylsilane compounds which are useful as modifying monomers in the polymerization of conjugated diene monomers, optionally together with aromatic vinyl monomers, thus producing polymers, specifically elastomeric polymers, which can favorably be used in rubber articles such as tires.

SUMMARY OF THE INVENTION

An object of the present invention is to provide a production method for a rubber composition for tires which solves the above problem and improves the dispersibility of silica and by which a rubber composition for tires that has low fuel consumption performance, wet grip performance, wear resistance, and processability that are improved in a balanced manner is obtained.

The present invention is directed to a production method for a rubber composition for tires, the method including: a base kneading step of kneading a rubber component containing a styrene butadiene rubber having a styrene content of not less than 30% by mass and a weight average molecular weight of not less than 600 thousand, silica, a silane coupling agent, and a basic substance; and a finish kneading step of feeding a vulcanizing material to a kneaded product obtained in the base kneading step, and kneading the resultant mixture.

In the base kneading step, the basic substance is preferably fed and kneaded after the rubber component, the silica, and the silane coupling agent are kneaded.

The basic substance is preferably a guanidine.

According to the present invention, since the production method for the rubber composition for tires includes: the base kneading step of kneading the rubber component containing the styrene butadiene rubber having a styrene content of not less than 30% by mass and a weight average molecular weight of not less than 600 thousand, the silica, the silane coupling agent, and the basic substance; and the finish kneading step of feeding the vulcanizing material to the kneaded product obtained in the base kneading step, and kneading the resultant mixture, the dispersibility of the silica is improved, and a rubber composition for tires that has low fuel consumption performance, wet grip performance, wear resistance, and processability that are improved in a balanced manner can be provided.

DESCRIPTION OF THE PREFERRED EMBODIMENTS

The production method according to the present invention includes: a base kneading step of kneading a rubber component containing a styrene butadiene rubber (SBR) having a styrene content of not less than 30% by mass and a weight average molecular weight of not less than 600 thousand, silica, a silane coupling agent, and a basic substance;

and a finish kneading step of feeding a vulcanizing material to a kneaded product obtained in the base kneading step, and kneading the resultant mixture.

In the present invention, in the base kneading step, by feeding and kneading the basic substance with the rubber component, the silica, and the silane coupling agent, a reaction between the silica and the silane coupling agent can be accelerated. In addition, although an SBR having a high styrene content and a high weight average molecular weight like the above SBR has a property of the SBR itself easily aggregating, aggregation of the SBR itself can be inhibited by kneading the SBR together with the basic substance. Owing to these effects, even in the case where an SBR having a high styrene content and a high weight average molecular weight is used, it is possible to favorably disperse the silica and provide a rubber composition for tires in which low fuel consumption performance, wet grip performance, wear resistance, and processability which are generally difficult to achieve at the same time are improved in a balanced manner.

First, each component used in the present invention will be described.

(Rubber Component)

In the present invention, an SBR having a styrene content of not less than 30% by mass and a weight average molecular weight of not less than 600 thousand is used as the rubber component.

For the reason that favorable wet grip performance is achieved, the styrene content of the above SBR is preferably not less than 35% by mass and more preferably not less than 38% by mass. In addition, for the reason that favorable wear resistance is achieved, the styrene content of the above SBR is preferably not greater than 60% by mass and more preferably not greater than 50% by mass.

The styrene content is measured by a method described in later-described examples.

For the reason that favorable wear resistance is achieved, the weight average molecular weight of the above SBR is preferably not less than 700 thousand and more preferably not less than 800 thousand. In addition, for the reason that favorable processability is achieved, the weight average molecular weight of the above SBR is preferably not greater than 1200 thousand and more preferably not greater than 1050 thousand.

In the present specification, the weight average molecular weight (Mw) can be obtained by conversion, based on polystyrene standard, of a value measured by gel permeation chromatography (GPC) (GPC-8000 series manufactured by Tosoh Corporation, detector: differential refractometer, separation column: TSK gel SuperMultipore HZ-M manufactured by Tosoh Corporation).

The above SBR is preferably modified by a compound (modifier) represented by the following formula (1).

[Chem. 1]

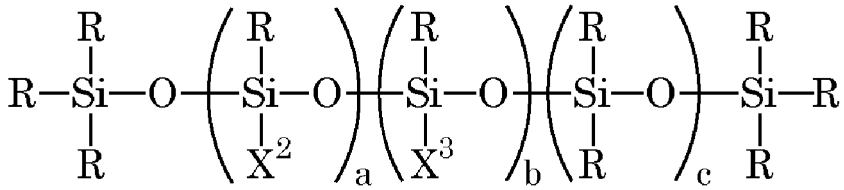

(1)

In the formula, Rs are the same or different from each other, and each represent a monovalent hydrocarbon group having 1 to 30 carbon atoms, and $X^2$ is a group represented by the following formula.

[Chem. 2] $-R^{11}-O-R^{12}-R^{13}$

In the formula, $R^{11}$ and $R^{12}$ are the same or different from each other, and each represent a bivalent hydrocarbon group, and $R^{13}$ represents a cyclic ether group. In the formula (1), $X^3$ is a group represented by the following formula.

[Chem. 3]

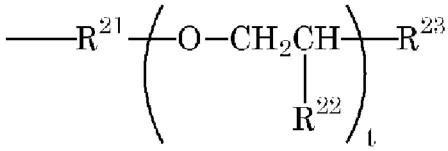

In the formula, $R^{21}$ represents an alkylene group or alkylarylene group having 2 to 10 carbon atoms, $R^{22}$ represents a hydrogen atom or a methyl group, $R^{23}$ represents an alkoxy group or aryloxy group having 1 to 10 carbon atoms, and t is an integer of 2 to 20. In the formula (1), a, b, and c each represent the number of times of repetition of each repeating unit, a is an integer of 3 to 200, b is an integer of 0 to 200, and c is an integer of 0 to 200.

As the styrene butadiene rubber modified by the compound (modifier) represented by the above formula (1), a styrene butadiene rubber obtained by modifying the polymerization terminals (active terminals) of a solution-polymerized styrene butadiene rubber (S-SBR) by the compound represented by the above formula (1) is suitably used.

In the above formula (1), Rs are the same or different from each other, and each represent a monovalent hydrocarbon group having 1 to 30 carbon atoms. The monovalent hydrocarbon group may be a straight chain group, a branched chain group, or a cyclic group, and examples of the monovalent hydrocarbon group include an aliphatic hydrocarbon group having 1 to 30 carbon atoms, an alicyclic hydrocarbon group having 3 to 30 carbon atoms, and an aromatic hydrocarbon group having 6 to 30 carbon atoms. Among those described above, an aliphatic hydrocarbon group having 1 to 30 carbon atoms is preferable from the standpoint that excellent low fuel consumption performance and wear resistance are achieved. An aliphatic hydrocarbon group having 1 to 20 carbon atoms is more preferable, an aliphatic hydrocarbon group having 1 to 10 carbon atoms is further preferable, and an aliphatic hydrocarbon group having 1 to 3 carbon atoms is particularly preferable. A preferable example of the above Rs is an alkyl group having carbon atoms as described above, and specific examples thereof include a methyl group and an ethyl group. Among those described above, a methyl group is particularly preferable from the standpoint that excellent low fuel consumption performance and wear resistance are achieved.

In $X^2$ in the above formula (1), $R^{11}$ and $R^{12}$ are the same or different from each other, and each represent a bivalent hydrocarbon group. Examples of $R^{11}$ and $R^{12}$ include a branched or unbranched alkylene group having 1 to 30 carbon atoms, a branched or unbranched alkenylene group having 2 to 30 carbon atoms, a branched or unbranched alkynylene group having 2 to 30 carbon atoms, and an arylene group having 6 to 30 carbon atoms. Among those described above, a branched or unbranched alkylene group having 1 to 30 carbon atoms is preferable. A branched or unbranched alkylene group having 1 to 15 carbon atoms is more preferable, a branched or unbranched alkylene group having 1 to 5 carbon atoms is further preferable, and an unbranched alkylene group having 1 to 3 carbon atoms is particularly preferable. A preferable example of the above $R^{11}$ and $R^{12}$ is an alkylene group having carbon atoms as described above, and specific examples thereof include a methylene group, an ethylene group, a propylene group, and an isopropylene group. Among those described above, a methylene group, an ethylene group, and a propylene group are particularly preferable from the standpoint that excellent low fuel consumption performance and wear resistance are achieved.

In $X^2$ in the above formula (1), $R^{13}$ represents a cyclic ether group. Examples of the cyclic ether group include a cyclic ether group having one ether bond such as an oxirane group, a cyclic ether group having two ether bonds such as a dioxolane group, and a cyclic ether group having three ether bonds such as a trioxane group. Among those described above, a cyclic ether group having one ether bond and 2 to 7 carbon atoms is preferable, a cyclic ether group having one ether bond and 2 to 5 carbon atoms is more preferable, and an oxirane group is further preferable. In addition, the cyclic ether group preferably does not have any unsaturated bond within the cyclic skeleton thereof. Moreover, a hydrogen atom in the above cyclic ether group may be substituted with the above monovalent hydrocarbon group.

In $X^3$ in the above formula (1), $R^{21}$ represents an alkylene group or alkylarylene group having 2 to 10 carbon atoms. Among those described above, a branched or unbranched alkylene group having 2 to 8 carbon atoms is preferable, a branched or unbranched alkylene group having 2 to 6 carbon atoms is more preferable, a branched or unbranched alkylene group having 2 to 4 carbon atoms is further preferable, and a branched or unbranched alkylene group having 3 carbon atoms is particularly preferable. A preferable example of the above $R^{21}$ is an alkylene group having carbon atoms as described above, and specific examples thereof include an ethylene group, a propylene group, an isopropylene group, a butylene group, an isobutylene group, and a pentylene group. Among those described above, an ethylene group, a propylene group, an isopropylene group, a butylene group, and an isobutylene group are particularly preferable, and a propylene group and an isopropylene group are most preferable.

In $X^3$ in the above formula (1), $R^{22}$ represents a hydrogen atom or a methyl group, and is particularly preferably a hydrogen atom.

In $X^3$ in the above formula (1), $R^{23}$ represents an alkoxy group or aryloxy group having 1 to 10 carbon atoms. Among those described above, a branched or unbranched alkoxy group having 1 to 8 carbon atoms is preferable, a branched or unbranched alkoxy group having 1 to 6 carbon atoms is more preferable, and a branched or unbranched alkoxy group having 1 to 4 carbon atoms is further preferable. A preferable example of the above $R^{23}$ is an alkoxy group having carbon atoms as described above, and specific examples thereof include a methoxy group, an ethoxy group, a propoxy group, an isopropoxy group, a butoxy group, and an isobutoxy group. Among those described above, a methoxy group, an ethoxy group, a propoxy group, and a butoxy group are particularly preferable, and a methoxy group is most preferable.

In $X^3$ in the above formula (1), t is an integer of 2 to 20, and is particularly preferably 2 to 8.

In the above formula (1), a is an integer of 3 to 200, and is particularly preferably 30 to 120; b is an integer of 0 to 200, and is particularly preferably 0 to 120; and c is an integer of 0 to 200, and is particularly preferably 0 to 120.

As the compound represented by the above formula (1), a compound represented by the following formula (2) is suitably used from the standpoint that the above performance can be favorably improved.

[Chem. 4]

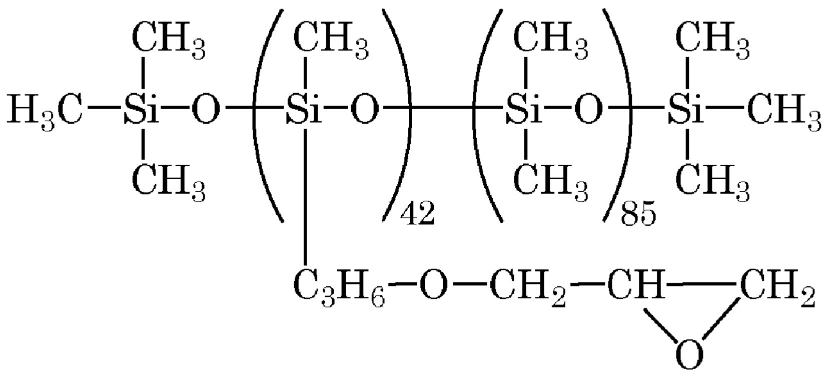

(2)

For the reason that low fuel consumption performance, wet grip performance, wear resistance, and processability are achieved in a balanced manner, the amount of the above SBR in 100% by mass of the rubber component in the rubber composition obtained by the production method according to the present invention is preferably not less than 50% by mass and more preferably not less than 60% by mass, and is preferably not greater than 95% by mass and more preferably not greater than 85% by mass.

In the present invention, in addition to the above SBR, another rubber component may be used. The other rubber component is not particularly limited, but examples thereof include diene rubbers such as natural rubber (NR), epoxidized natural rubber (ENR), isoprene rubber (IR), and butadiene rubber (BR). In addition, an SBR other than the above SBR can be used. These rubbers may be used solely, or two or more of these rubbers may be used in combination. Among those described above, BR is preferable for the reason that low fuel consumption performance, wet grip performance, wear resistance, and processability are achieved in a balanced manner. BR is not particularly limited, and one that is used generally in the tire industry can be used.

For the reason that low fuel consumption performance, wet grip performance, wear resistance, and processability are achieved in a balanced manner, the amount of BR in 100% by mass of the rubber component in the rubber composition obtained by the production method according to the present invention is preferably not less than 5% by mass and more preferably not less than 15% by mass, and is preferably not greater than 50% by mass and more preferably not greater than 40% by mass.

(Silica)

Examples of the silica include dry-process silica (silicic anhydride) and wet-process silica (hydrous silicic acid), and wet-process silica is preferable for the reason that it has a higher silanol group content.

The silica has a nitrogen adsorption specific surface area ($N_2SA$) of preferably not less than 50 $m^2/g$ and more preferably not less than 100 $m^2/g$. When the $N_2SA$ of the silica is less than 50 $m^2/g$, there is a possibility that sufficient wear resistance is not achieved. The $N_2SA$ of the silica is preferably not greater than 220 $m^2/g$ and more preferably not greater than 200 $m^2/g$. When the $N_2SA$ of the silica exceeds 220 $m^2/g$, there is a possibility that dispersion of the silica in the rubber becomes difficult, so that poor dispersion is caused.

The nitrogen adsorption specific surface area of the silica is a value measured by the BET method according to ASTM D3037-81.

The amount of the silica per 100 parts by mass of the rubber component in the rubber composition obtained by the production method according to the present invention is preferably not less than 40 parts by mass, more preferably not less than 60 parts by mass, and further preferably not less than 70 parts by mass. When the amount of the silica is less than 40 parts by mass, there is a possibility that sufficient low fuel consumption performance is not achieved. The amount of the silica is preferably not greater than 150 parts by mass, more preferably not greater than 120 parts by mass, and further preferably not greater than 100 parts by mass. When the amount of the silica exceeds 150 parts by mass, there is a possibility that dispersion of the silica in the rubber becomes difficult, so that poor dispersion is caused.

(Silane Coupling Agent)

The silane coupling agent is not particularly limited, but examples thereof include sulfide-based silane coupling agents, vinyl-based silane coupling agents, amino-based silane coupling agents, glycidoxy-based silane coupling agents, nitro-based silane coupling agents, and chloro-based silane coupling agents. Among those described above, sulfide-based silane coupling agents are preferable, and bis(3-triethoxysilylpropyl)tetrasulfide is more preferable, for the reason that favorable wear resistance is achieved.

The amount of the silane coupling agent per 100 parts by mass of the silica in the rubber composition obtained by the production method according to the present invention is preferably not less than 1 part by mass, more preferably not less than 3 parts by mass, and further preferably not less than 4 parts by mass. When the amount of the silane coupling agent is less than 1 part by mass, a sufficient effect of decreasing rolling resistance (improvement of low fuel consumption performance) tends not to be obtained. The amount of the silane coupling agent is preferably not greater than 20 parts by mass, more preferably not greater than 15 parts by mass, and further preferably not greater than 12 parts by mass. When the amount of the silane coupling agent exceeds 20 parts by mass, a rolling resistance decrease (low fuel consumption performance improvement) effect corresponding to the added amount of the silane coupling agent which is expensive tends not to be obtained.

(Basic substance)

The basic substance in the present invention is not particularly limited as long as it is a substance exhibiting basicity.

As the basic substance, guanidines are preferable for the reason that the effect of accelerating the reaction between the silane coupling agent and the silica is great. Guanidines are substances used also as vulcanization accelerators, and specific examples thereof include 1,3-diphenylguanidine, 1,3-di-o-tolylguanidine, 1-o-tolylbiguanide, the di-o-tolylguanidine salt of dicatechol borate, 1,3-di-o-cumenylguanidine, 1,3-di-o-biphenylguanidine, and 1,3-di-o-cumenyl-2-propionylguanidine. Among those described above, 1,3-diphenylguanidine, 1,3-di-o-tolylguanidine, and 1-o-tolylbiguanide are preferable, and 1,3-diphenylguanidine is more preferable, for the reason that the reactivity is high and the effect of accelerating the reaction between the silane coupling agent and the silica is particularly great.

The amount of the basic substance per 100 parts by mass of the silica in the rubber composition obtained by the production method according to the present invention is preferably not less than 0.5 parts by mass, more preferably not less than 1 part by mass, and further preferably not less than 1.5 parts by mass. When the amount of the basic substance is less than 0.5 parts by mass, there is a possibility that a sufficient effect of accelerating the reaction between the silane coupling agent and the silica is not obtained. The amount of the basic substance is preferably not greater than 15 parts by mass, more preferably not greater than 10 parts by mass, and further preferably not greater than 5 parts by mass. When the amount of the basic substance exceeds 15 parts by mass, there is a possibility that an amount of foreign matter in the rubber becomes large, the rolling resistance increases, and the low fuel consumption performance diminishes.

The amount of the basic substance described here means the amount of the basic substance fed in the base kneading step, and the amount of the basic substance fed in another step, such as a vulcanization accelerator fed in the finish kneading step, is not included.

(Vulcanizing Material)

As the vulcanizing material, for example, sulfur, a vulcanization accelerator, or the like can be used.

The sulfur is not particularly limited, and one that is used generally in the tire industry can be used, but powder sulfur is preferable.

For the reason that low fuel consumption performance, wet grip performance, wear resistance, and processability are achieved in a balanced manner, the amount of the sulfur per 100 parts by mass of the rubber component in the rubber composition obtained by the production method according to the present invention is preferably not less than 0.1 parts by mass and more preferably not less than 0.5 parts by mass, and is preferably not greater than 6 parts by mass and more preferably not greater than 4 parts by mass.

The vulcanization accelerator is not particularly limited, and one that is used generally in the tire industry can be used as the vulcanization accelerator, but examples of the vulcanization accelerator include guanidines, sulfenamides, thiazoles, thiurams, dithiocarbamates, thioureas, and xanthates. These vulcanization accelerators may be used solely, or two or more of these vulcanization accelerators may be used in combination. Among those described above, a guanidine and another vulcanization accelerator are preferably used in combination, and a guanidine and a sulfenamide are more preferably used in combination. Examples and the like of guanidines are the same as described in relation to the basic substance.

For the reason that low fuel consumption performance, wet grip performance, wear resistance, and processability are achieved in a balanced manner, the amount of the vulcanization accelerator per 100 parts by mass of the rubber component in the rubber composition obtained by the production method according to the present invention is preferably not less than 1 part by mass and more preferably not less than 2 parts by mass, and is preferably not greater than 10 parts by mass and more preferably not greater than 8 parts by mass.
The amount of the vulcanization accelerator described here is the total amount of the vulcanization accelerator used in all steps, and in the case where a vulcanization accelerator such as guanidines is used as the basic substance, the amount thereof is also included.

(Other Components)

In the rubber composition obtained by the production method according to the present invention, in addition to the above components, compounding ingredients that are used generally in production of a rubber composition, such as carbon black, oil, an antioxidant, zinc oxide, and stearic acid, may be blended as appropriate.
Next, each kneading step in the production method according to the present invention will be described.

(Base Kneading Step)

In the base kneading step, the rubber component containing the above SBR, the silica, the silane coupling agent, and the basic substance are fed and kneaded. The kneading method is not particularly limited, and a known kneading machine such as a Banbury mixer and a kneader can be used. In addition, the kneading time (the entire kneading time in the base kneading step) is preferably 4 to 30 minutes, and the kneading temperature is preferably 130 to 160°C.
In order to bind the silane coupling agent and the silica, a polycondensation reaction between the silane coupling agent and the silica needs to take place after a hydrolysis reaction of the silane coupling agent takes place. Then, the hydrolysis reaction is accelerated by causing the reaction system to be acidic, and the polycondensation reaction is accelerated by causing the reaction system to be basic. The basic substance used in the present invention serves to accelerate the polycondensation reaction. Thus, the basic substance is preferably fed after the hydrolysis reaction proceeds to some extent. From such a standpoint, in the base kneading step, after the rubber component, the silica, and the silane coupling agent are kneaded, the basic substance is preferably fed and kneaded.
The time from start of feeding and kneading the rubber component, the silica, and the silane coupling agent until the basic substance is fed (the time for initially kneading the rubber component, the silica, and the silane coupling agent) is preferably 0.5 to 10 minutes. In addition, the kneading time after the basic substance is fed is preferably 0.5 to 10 minutes.
Each of the rubber component, the silica, the silane coupling agent, and the basic substance may be fed in the whole amount at one time or may be divided and fed several times, but is preferably fed in the whole amount at one time for the reason that the reaction between the silica and the silane coupling agent can be efficiently caused to proceed.
In the base kneading step, at least the rubber component, the silica, the silane coupling agent, and the basic substance only need to be kneaded. However, together with these materials, carbon black, stearic acid, etc. may be kneaded. For the reason that the reaction between the silica and the silane coupling agent can be efficiently caused to proceed, the carbon black and stearic acid are preferably fed and kneaded at the initial stage of kneading the rubber component, the silica, and the silane coupling agent. In addition, in this case, the basic substance is preferably fed after the rubber component, the silica, the silane coupling agent, the carbon black, and stearic acid are kneaded.

(Finish Kneading Step)

In the finish kneading step, the vulcanizing material is fed to the kneaded product obtained in the base kneading step, and the resultant mixture is kneaded. The kneading method is not particularly limited, and a known kneading machine such as an open roll can be used. In addition, the kneading time is preferably 3 to 15 minutes, and the kneading temperature is preferably 40 to 80°C.
In the finish kneading step, at least the kneaded product obtained in the base kneading step, the sulfur, and the vulcanization accelerator only need to be kneaded. However, together with these materials, zinc oxide, an antioxidant, oil, etc. may be kneaded.

(Other Steps)

The kneaded product (unvulcanized rubber composition) obtained in the finish kneading step is extruded into a shape of a component such as a tread, is formed on a tire forming machine by an ordinary method, and is attached

together with other tire components, thereby forming an unvulcanized tire. Thereafter, the unvulcanized tire is heated and pressurized within a vulcanizing machine, whereby a tire can be manufactured. The manufactured tire is suitably used as a tire for a passenger car, a tire for a bus, a tire for a truck, or the like.

EXAMPLES

The present invention will be specifically described by means of examples, but the present invention is not limited to these examples.

The physical properties of a polymer produced below were measured as follows.

[Weight Average Molecular Weight (Mw)]

A weight average molecular weight (Mw) was measured by a gel permeation chromatography (GPC) method under the following conditions (1) to (8).

(1) Apparatus: GPC-8000 series manufactured by Tosoh Corporation
(2) Separation column: TSK gel SuperMultipore HZ-M manufactured by Tosoh Corporation
(3) Measurement temperature: 40°C
(4) Carrier: tetrahydrofuran
(5) Flow rate: 0.6 mL/min
(6) Injection amount: 5 μL
(7) Detector: differential refractometer
(8) Molecular weight standard: polystyrene standard

[Styrene Content]

A styrene content was measured by using a JNM-ECA series NMR apparatus manufactured by JEOL Ltd.

<Production Example 1 (SBR 1)>

Six thousand grams of cyclohexane, 150 g of styrene, 450 g of 1,3-butadiene, and an amount of tetramethylethylenediamine equivalent to a 1.5 times molar amount with respect to n-butyl lithium to be used were fed into an autoclave equipped with an agitator, then 9.5 millimole of n-butyl lithium was added, and polymerization was started at 50°C. After 20 minutes elapsed from the start of the polymerization, a mixture of 60 g of styrene and 340 g of 1,3-butadiene was continuously added in 60 minutes. The highest temperature during the polymerization reaction was 70°C.

After end of the continuous addition, the polymerization reaction continued further for 40 minutes. After the polymerization inversion rate was confirmed to become 100%, a small amount of the polymerization solution was sampled. An excessive amount of methanol was added to the small amount of the sampled polymerization solution to stop the reaction, and then the sampled polymerization solution was air-dried to obtain a polymer as a sample to be analyzed by gel permeation chromatography.

Immediately after the small amount of the polymerization solution was sampled, an amount of polyorganosiloxane A equivalent to 0.03 times the molar amount of used n-butyl lithium (the compound represented by the above formula (2) and can be synthesized by the method described in "the 4th series of Experimental Chemistry", edited by the Chemical Society of Japan, 28th volume, and its reference.) was added in a state of a 10% toluene solution and reacted for 30 minutes, and then an amount of methanol equivalent to two times the molar amount of used n-butyl lithium was added as a polymerization terminator to obtain a polymerization solution containing conjugated diene rubber I. As an antioxidant, 0.2 parts by mass of Irganox 1520 (manufactured by Ciba-Geigy Corporation) per 100 parts by mass of the rubber content was added to the polymerization solution. Then, the polymerization solvent was removed by steam stripping, and vacuum dry was performed at 60°C for 24 hours to obtain solid SBR 1. The styrene content of the obtained SBR 1 was 42% by mass, and Mw thereof was about 1000 thousand.

The following will collectively describe various chemicals used in Examples and Comparative Examples.

SBR 1: a modified SBR (styrene content: 42% by mass, Mw: about 1000 thousand) produced in Production Example 1.

SBR 2: Nipol NS522 (styrene content: 39% by mass, Mw: 920 thousand, an oil-extended SBR (the amount of the rubber content is described in Table 1) manufactured by Zeon Corporation.

SBR 3: Nipol NS616 (styrene content: 21% by mass, Mw: 550 thousand) manufactured by Zeon Corporation.

BR: BR150B manufactured by Ube Industries, Ltd.

Silica: Ultrasil VN3 ($N_2SA$: 175 $m^2/g$) manufactured by Evonik Degussa GmbH.

Carbon black: Diablack N220 ($N_2SA$: 114 $m^2/g$) manufactured by Mitsubishi Chemical Corporation.

Silane coupling agent: Si69 (bis(3-triethoxysilylpropyl)tetrasulfide) manufactured by Evonik Degussa GmbH.

Stearic acid: bead stearic acid "Tsubaki" manufactured by NOF Corporation.

Vulcanization accelerator DPG: Nocceler D (1,3-diphenylguanidine) manufactured by Ouchi Shinko Chemical Industrial Co., Ltd.

Zinc oxide: two types of zinc oxide manufactured by Mitsui Mining & Smelting Co., Ltd.

Antioxidant: Nocrac 6C (N-phenyl-N'-(1,3-dimethylbutyl)-p-phenylenediamine) manufactured by Ouchi Shinko Chemical Industrial Co., Ltd.

Oil: X140 manufactured by Japan Energy Corporation.

Vulcanization accelerator CZ: Nocceler NS (N-tert-butyl-2-benzothiazolylsulfenamide) manufactured by Ouchi Shinko Chemical Industrial Co., Ltd.

Sulfur: sulfur 200 mesh, manufactured by Tsurumi Chemical Industry Co., Ltd.

Examples and Comparative Examples

(Base Kneading Step)

The materials described at items of base kneading in Table 1 were kneaded by using a 1.7-L Banbury mixer to obtain a kneaded product. X-1 and X-2 in Table 1 mean that each material at each item was fed and kneaded in the order of X-1 and X-2. The kneading temperature and the kneading time for each item are as follows.

X-1 kneading temperature: 150°C, kneading time: 5 minutes
X-2 kneading temperature: 150°C, kneading time: 5 minutes

(Finish Kneading Step)

The materials described at items of finish kneading in Table 1 were fed to the kneaded product obtained in the base kneading step, and the resultant mixture was kneaded at 70°C for 8 minutes by using an open roll to obtain au unvulcanized rubber composition.

(Vulcanizing Step)

The unvulcanized rubber composition obtained in the finish kneading step was pressed and vulcanized by a 0.5 mm-thick mold at 170°C for 20 minutes to obtain a vulcanized rubber composition.

In addition, the unvulcanized rubber composition obtained in the finish kneading step was extruded into a shape of a tread, and was attached together with other tire components on a tire forming machine to form an unvulcanized tire. The unvulcanized tire was pressed and vulcanized at 170°C for 20 minutes to obtain a test tire.

The following evaluation was made for the obtained unvulcanized rubber composition, vulcanized rubber composition, and test tire. The results are shown in Table 1.

(Processability Index (Mooney Viscosity))

The Mooney viscosity of the unvulcanized rubber composition was measured at 130°C according to JIS K6300. The results are shown as indexes based on the following calculation formula. A higher index indicates that the Mooney viscosity is lower and the processability is more excellent.

$$(\text{Processability index}) = (ML_{1+4} \text{ of Comparative Example 1}) / (ML_{1+4} \text{ with each composition}) \times 100$$

(Rolling Resistance Index)

By using a viscoelastic spectrometer VES (manufactured by Iwamoto Seisakusho), tanδ of each vulcanized rubber composition was measured under the conditions of: a temperature of 70°C; an initial strain of 10%; and a dynamic strain of 2%. The results are shown as indexes based on the following calculation formula. A higher rolling resistance index indicates that the low fuel consumption performance is more excellent.

$$(\text{Rolling resistance index}) = (\tan\delta \text{ of Comparative Example 1}) / (\tan\delta \text{ with each composition}) \times 100$$

(Wet Grip Performance Index)

Each test tire was mounted to a front wheel drive vehicle produced in Japan, the vehicle was caused to run on a wet asphalt road surface, and a braking distance from an initial speed of 100 km/h was obtained. The results are shown as indexes based on the following calculation formula. A higher index indicates that the wet grip performance is more excellent.

$$(\text{Wet grip performance index}) = (\text{braking distance of Comparative Example 1}) / (\text{braking distance with each composition}) \times 100$$

(Wear Resistance Index)

Each test tire was mounted to a front wheel drive vehicle produced in Japan. After the vehicle was caused to run for a distance of 8000 km, the groove depth in the tire tread portion was measured, and a running distance at which the tire groove depth was decreased by 1 mm was calculated. The results are shown as indexes based on the following calculation formula. A higher index indicates that the wear resistance is more excellent.

$$(\text{Wear resistance index}) = (\text{running distance, with each composition, at which groove depth was decreased by 1 mm}) / (\text{running distance of Comparative Example 1 at which groove depth was decreased by 1 mm}) \times 100$$

[Table 1]

| | | | | Comp. Ex. 1 | Ex. 1 | Comp. Ex. 2 | Ex. 2 | Comp. Ex. 3 | Comp. Ex. 4 |
|---|---|---|---|---|---|---|---|---|---|
| Blending amount (parts by mass) | Base kneading | X-1 | SBR1 | 70 | 70 | - | - | - | - |
| | | | SBR2 | - | - | 70 | 70 | - | - |
| | | | SBR3 | - | - | - | - | 70 | 70 |
| | | | BR | 30 | 30 | 30 | 30 | 30 | 30 |
| | | | Silica | 75 | 75 | 75 | 75 | 75 | 75 |
| | | | Carbon black | 5 | 5 | 5 | 5 | 5 | 5 |
| | | | Silane coupling agent | 8 | 8 | 8 | 8 | 8 | 8 |
| | | | Stearic acid | 2 | 2 | 2 | 2 | 2 | 2 |
| | | X-2 | Vulcanization accelerator DPG | - | 2.2 | - | 2.2 | - | 2.2 |
| | Finish kneading | | Zinc oxide | 2 | 2 | 2 | 2 | 2 | 2 |
| | | | Antioxidant | 2 | 2 | 2 | 2 | 2 | 2 |
| | | | Oil | 20 | 20 | 20 | 20 | 20 | 20 |
| | | | Vulcanization accelerator CZ | 1.8 | 1.8 | 1.8 | 1.8 | 1.8 | 1.8 |
| | | | Vulcanization accelerator DPG | 2.2 | - | 2.2 | - | 2.2 | - |
| | | | Sulfur | 1.6 | 1.6 | 1.6 | 1.6 | 1.6 | 1.6 |
| Evaluation | Processability index | | | 100 | 104 | 98 | 102 | 105 | 106 |
| | Rolling resistance index | | | 100 | 105 | 97 | 102 | 104 | 106 |
| | Wet grip performance index | | | 100 | 102 | 102 | 106 | 95 | 96 |
| | Wear resistance index | | | 100 | 104 | 105 | 107 | 95 | 96 |

From Table 1, it was found that the Examples obtained by the production method including the base kneading step of kneading the rubber component containing the SBR (SBR1, 2) having a styrene content of not less than 30% by mass and a weight average molecular weight of not less than 600 thousand, the silica, the silane coupling agent, and the basic substance (vulcanization accelerator DPG) and the finish kneading step of feeding the vulcanizing material to the kneaded product obtained in the base kneading step and kneading the resultant mixture have low fuel consumption performance, wet grip performance, wear resistance, and processability that are improved in a balanced manner. In addition, it was found that in the case where the SBR (SBR 3) having a styrene content and a weight average molecular weight that are outside the above ranges is used, even when the basic substance is kneaded in the base kneading step, the performance improvement effect is small.

## Claims

1. A production method for a rubber composition for tires, the method comprising:

    a base kneading step of kneading a rubber component containing a styrene butadiene rubber having a styrene content of not less than 30% by mass and a weight average molecular weight of not less than 600 thousand, silica, a silane coupling agent, and a basic substance; and
    a finish kneading step of feeding a vulcanizing material to a kneaded product obtained in the base kneading step, and kneading the resultant mixture.

2. The production method for the rubber composition for tires according to claim 1, wherein in the base kneading step, the basic substance is fed and kneaded after the rubber component, the silica, and the silane coupling agent are kneaded.

3. The production method for the rubber composition for tires according to claim 1 or 2, wherein the basic substance is a guanidine.

## Patentansprüche

1. Herstellungsverfahren für eine Kautschukzusammensetzung für Reifen, wobei das Verfahren umfasst:

    einen Basisknetschritt des Knetens einer Kautschukkomponente, die einen Styrol-Butadien-Kautschuk mit einem Styrolgehalt von nicht weniger als 30 Massen-% und einem gewichtsgemittelten Molekulargewicht von nicht weniger als 600 Tausend, Siliciumdioxid, ein Silankupplungsmittel und eine basische Substanz enthält; und
    einen Endknetschritt des Zuführens eines Vulkanisiermaterials zu einem gekneteten Produkt, das in dem Basisknetschritt erhalten wurde, und des Knetens der resultierenden Mischung.

2. Herstellungsverfahren für die Kautschukzusammensetzung für Reifen nach Anspruch 1, wobei im Basisknetschritt die basische Substanz zugeführt und geknetet wird, nachdem die Kautschukkomponente, das Siliciumdioxid und das Silankupplungsmittel geknetet wurden.

3. Verfahren zur Herstellung der Gummimischung für Reifen nach Anspruch 1 oder 2, wobei die basische Substanz ein Guanidin ist.

## Revendications

1. Procédé de production d’une composition de caoutchouc pour pneus, le procédé comprenant :

    une étape de malaxage de base consistant à malaxer un composant caoutchouc contenant un caoutchouc de styrène-butadiène ayant une teneur en styrène non inférieure à 30 % en masse et une masse moléculaire moyenne en masse non inférieure à 600 000, de la silice, un agent de couplage au silane, et une substance basique ; et
    une étape de malaxage de finition consistant à introduire un matériau de vulcanisation dans un produit malaxé obtenu dans l’étape de malaxage de base, et à malaxer le mélange résultant.

2. Procédé de production d'une composition de caoutchouc pour pneus selon la revendication 1, dans lequel, dans l'étape de malaxage de base, la substance basique est introduite et malaxée après que le composant caoutchouc, la silice et l'agent de couplage au silane ont été malaxés.

3. Procédé de production d'une composition de caoutchouc pour pneus selon la revendication 1 ou 2, dans lequel la substance basique est une guanidine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002363346 A
- WO 2008145155 A1
- EP 2947087 A1
- WO 2015055252 A1


### Non-patent literature cited in the description


- the 4th series of Experimental Chemistry. vol. 28